# EUROPÄISCHE PATENTANMELDUNG

(11) **EP 4 151 856 A1**
(43) Veröffentlichungstag der Anmeldung: **22.03.2023**
(21) Anmeldenummer: 22194418.4
(22) Anmeldetag: 07.09.2022
(51) Int. Cl.: F03D 80/40

(54) **WINDENERGIEANLAGEN-ROTORBLATT**

(30) Priorität: 16.09.2021 DE 102021123954
(71) Anmelder: Wobben Properties GmbH, 26607 Aurich (DE)
(72) Erfinder: Mahmoud, Muhanad, 26605 Aurich (DE); Daboul, Hussam, 26624 Südbrookmerland (DE); Messing, Ralf, 26605 Aurich (DE)
(74) Vertreter: Eisenführ Speiser

(57) **Zusammenfassung**

Es wird ein Windenergieanlagen-Rotorblatt (200) mit einem Rotorblattwurzelbereich (200a), einem Rotorblattspitzenbereich (200b), einer Druckseite (200c), einer Saugseite (200d), einer Vorderkante (201), einer Hinterkante (202) und mit mindestens einem Steg (210, 211, 212) entlang einer Längsrichtung (L) des Rotorblattes (200) vorgesehen. Ferner ist eine Umlenkeinheit (250) mit mindestens zwei Umlenkbögen zwischen einem Ende des mindestens einen Steges (210, 211, 212) und dem Rotorblattspitzenbereich vorgesehen.

## Beschreibung

Die vorliegende Erfindung betrifft ein Windenergieanlagen-Rotorblatt sowie eine Windenergieanlage mit einem entsprechenden Rotorblatt.

Da die Rotorblätter einer Windenergieanlage ungeschützt allen Witterungsbedingungen ausgesetzt sind, kann es bei bestimmten Temperaturen zu einer Vereisung der Rotorblätter kommen. Um dies zu verhindern, kann eine Rotorblattheizung verwendet werden. Hierbei kann entweder eine Heizung außen am Rotorblatt vorgesehen werden oder erwärmte Luft kann innerhalb des Rotorblattes vorgesehen sein.

WO 2017/021350 A1 zeigt ein Windenergieanlagen-Rotorblatt mit einem Rotorblattwurzelbereich und einem Rotorblattspitzenbereich sowie einer Rotorblattheizung. Ferner ist mindestens ein Steg entlang einer Längsrichtung des Rotorblattes vorgesehen. An dem Steg kann eine Umlenkeinheit in Form eines Stegtropfens vorgesehen sein, um eine Verwirbelung der Luft beim Umlenken zu reduzieren.

WO 2018/211055 zeigt ein Rotorblatt einer Windenergieanlage einer Rotorblattheizung mit einem Rotorblatt, welches einen Steg und eine Umlenkeinheit an der Rotorblattspitze zum Umlenken von erwärmter Luft aufweist.

In der prioritätsbegründenden deutschen Patentanmeldung hat das Deutsche Patent- und Markenamt die folgenden Dokumente recherchiert: DE 200 14 238 U1, WO 2017/ 021 350 A1, DE 10 2010 051 292 B4, WO 2014/202 161A1, WO 2018/211 055 A1, DE 10 2010 051 297 B4, DE 10 2010 051 293 A1, US 2016/0 040 654 A1 und US 2020/0 088 172 A1.

Es ist eine Aufgabe der vorliegenden Erfindung, ein Windenergieanlagen-Rotorblatt vorzusehen, welches eine verbesserte Beheizung des Rotorblattes ermöglicht.

Diese Aufgabe wird durch ein Windenergieanlagen-Rotorblatt nach Anspruch 1 gelöst.

Somit wird ein Windenergieanlagen-Rotorblatt mit einem Rotorblattwurzelbereich, einem Rotorblattspitzenbereich, einer Druckseite, einer Saugseite, einer Vorderkante, einer Hinterkante und mit mindestens einem Steg zwischen der Druckseite und der Saugseite und entlang einer Längsrichtung des Rotorblattes vorgesehen. Ferner ist eine Umlenkeinheit mit mindestens zwei Umlenkbögen in oder an einem Strömungshindernis einer Luftführung vorgesehen.

Durch die Umlenkeinheit mit dem Mehrfachumlenkbogen kann eine deutliche Reduzierung von Druckverlusten bei einer Richtungsänderung bzw. bei einer Abzweigung der Luftströmung erreicht werden. Im Vergleich zu einer bislang bekannten Umlenkeinheit mit einem Umlenkbogen kann eine Senkung des Druckverlustes um 20 % erreicht werden.

Gemäß einem Aspekt der vorliegenden Erfindung kann die erfindungsgemäße Umlenkeinheit auch bei einer Abzweigung für eine Luftströmung im Inneren des Rotorblattes verwendet werden. Auch hier kann durch die erfindungsgemäße Ausgestaltung der Umlenkeinheit eine erhebliche Reduzierung des Druckverlustes erreicht werden. Damit kann bei gleichbleibender Lüfterleistung der Volumenstrom für die Beheizung des Rotorblattes erhöht werden.

Gemäß einem Aspekt der vorliegenden Erfindung weist die Luftführung mindestens einen Steg auf, welcher zwischen der Druckseite und der Saugseite und entlang einer Längsrichtung des Rotorblattes sich erstreckt. Eine Umlenkeinheit (mit den mindestens zwei Umlenkbögen) ist zwischen einem Ende des mindestens einen Stegs und z. B. dem Rotorblattspitzenbereich oder einem weiteren Steg vorgesehen und dazu ausgestaltet, erwärmte Luft, welche von dem Rotorblattwurzelbereich entlang des mindestens einen Stegs strömt, umzulenken.

Gemäß einem weiteren Aspekt der vorliegenden Erfindung weist die Luftführung eine Abzweigung auf. Eine erfindungsgemäße Umlenkeinheit ist an der Abzweigung vorgesehen und dient der Reduzierung der Druckverluste im Bereich der Abzweigung.

Gemäß der Erfindung kann ein Strömungshindernis in der Luftführung eine Abzweigung der Luftführung oder ein Ende des Bereichs der Luftführung (z. B. ein Ende des Steges) darstellen, wo ein Umlenken der Luftströmung benötigt wird.

Ferner betrifft die Erfindung eine Windenergieanlage mit mindestens einem oben beschriebenen Windenergieanlagen-Rotorblatt und einer Rotorblatt-Heizung.

Gemäß einem Aspekt der vorliegenden Erfindung kann warme bzw. erwärmte Luft (welche durch die Rotorblattheizung erzeugt wird) zur Beheizung des Rotorblattes in den Rotorblattwurzelbereich eingeführt bzw. eingeströmt werden. Die erwärmte Luft kann dann durch eine Luftführung entlang der Länge des Rotorblattes strömen. Die Luftführung kann in dem Bereich zwischen der Vorderkante und einem ersten Steg vorgesehen sein, so dass die erwärmte Luft entlang der Vorderkante und des Steges vom Rotorblattwurzelbereich in Richtung des Rotorblattspitzenbereichs strömt. Alternativ dazu kann die erwärmte Luft in den Bereich zwischen der Hinterkante und dem anderen Steg von dem Wurzelblattwurzelbereich zum Rotorblattspitzenbereich strömen. An einem der Stege ist eine Umlenkeinheit mit mindestens zwei Umlenkbögen vorgesehen.

Somit wird ein Windenergieanlagen-Rotorblatt mit einem Rotorblattwurzelbereich, einem Rotorblattspitzenbereich, einer Druckseite, einer Saugseite und mindestens einem Steg vorgesehen, welcher sich entlang einer Längsrichtung des Rotorblattes erstreckt. Bei herkömmlichen Rotorblättern ist die Rotorblattspitze typischerweise zwar hohl ausgestaltet, aber mit einem Füllmaterial ausgeschäumt. Damit wird eine effektive Beheizung einer Rotorblattspitze behindert. Dies kann zu einem Eisansatz insbesondere im Bereich der Rotorblattspitze und kann aufgrund der hohen Geschwindigkeit der Rotorblattspitze zu einem gefährlichen Eisabwurf führen. Ferner wird eine beheizbare Blattspitze mit einer angepassten Umlenkung in dem Rotorblattspitzenbereich vorgesehen. Ferner kann optional ein Stegschott vorgesehen werden. Zur weiteren Verbesserung kann eine Bypass-Hutze in oder an einem der Stege vorgesehen werden, welche die Strömung im Umlenkbereich optimiert, in dem die Grenzschichtströmung am Stegende abgesaugt wird und somit Strömungsabrisse und Verwirbelungen vermindert werden können.

Gemäß der Erfindung kann ein Volumenstrom der Blattheizung vergrößert werden, ohne die Leistung der Lüfter zu erhöhen. Mit dem erfindungsgemäßen Rotorblatt ist es möglich, eine Luftströmung bei jeder Strömungsgeschwindigkeit optimal umzulenken und einen Druckverlust zu reduzieren. Mit dem erfindungsgemäßen Rotorblatt kann ein Strömungsabriss sowie Verwirbelungen im Umlenkbereich oder im Bereich der Abzweigung reduziert werden. Insbesondere kann ein Totluftgebiet reduziert werden, dass sich an demjenigen Ende des Stegs bildet, das benachbart zu der Umlenkeinheit ist. Das Rotorblatt bzw. die Rotorblattspitze kann enteist werden, um einen Eisabwurf zu reduzieren.

Mit dem erfindungsgemäßen Rotorblatt wird die Luftströmung einer Rotorblattbeheizung auf einfache und unkomplizierte Art und Weise verbessert, ohne dass dabei der Blitzschutz negativ beeinträchtigt wird.

Zusätzlich oder alternativ dazu kann ein Umlenkelement vorgesehen werden, welches eine möglichst geringe Querschnittsflächenänderung aufweist, wobei der Strömungskanal nach dem Einbau der Umlenkeinheit eine geringe Querschnittsflächenänderung aufweist.

Gemäß der Erfindung wird ein Windenergieanlagen-Rotorblatt vorgesehen, welches mindestens ein, vorzugsweise zwei, Stege entlang der Längsrichtung des Rotorblattes aufweist. Zur Beheizung des Rotorblattes kann eine Luftströmung entlang der Stege vorgesehen sein. Die Luftströmung startet im Rotorblattwurzelbereich und die, vorzugsweise erwärmte, Luft strömt entlang des ersten und/oder zweiten Steges und muss umgelenkt werden. Dies erfolgt durch eine Umlenkeinheit mit mindestens zwei Umlenkbögen. Die beiden Umlenkbögen weisen jeweils ein erstes und zweites Ende mit einem mittleren Bereich dazwischen auf. Die mittleren Bereiche sind als Bogen ausgestaltet, die jeweils einen Radius aufweisen.

Optional kann eine hohle Rotorblattspitze vorgesehen sein, vor der eine weitere Umlenkeinheit vorgesehen ist, welche einen ersten und zweiten Luftkanal zwischen der Umlenkeinheit und den Schalen des Rotorblattes frei lässt, so dass die hohle Rotorblattspitze beheizt bzw. mit warmer Luft durchströmt werden kann.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage gemäß der Erfindung,
- Fig. 2: zeigt eine schematische und abschnittsweise Darstellung eines Rotorblattes der Windenergieanlage von Fig. 1,
- Fig. 3: zeigt eine schematische Darstellung eines Abschnitts eines Rotorblattes gemäß der Erfindung,
- Fig. 4: zeigt einen Graphen zur Veranschaulichung der Abhängigkeit des Druckverlustes der Umlenkeinheit von dem Volumenstrom, und
- Fig. 5A: zeigen eine schematische Veranschaulichung eines Druckverlustes
- und 5B: bei einer Umlenkeinheit in einem Rotorblatt gemäß dem Stand der Technik und gemäß der Erfindung.

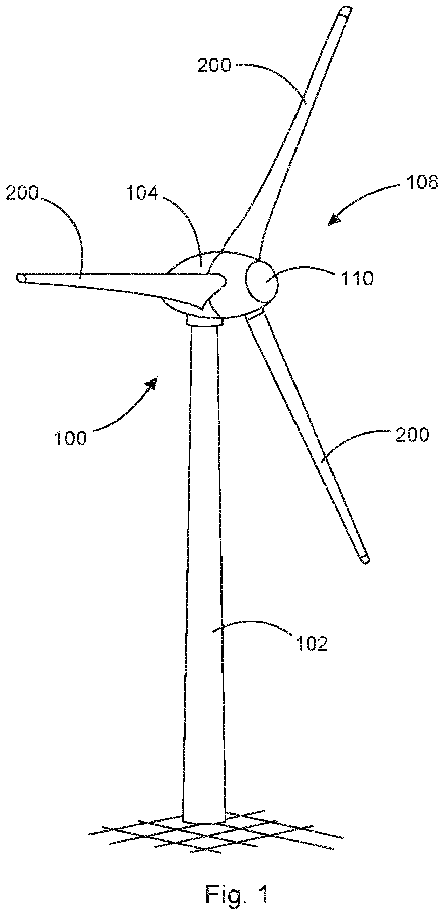

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 200 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 200 können durch Pitchmotoren an den Rotorblattwurzeln der jeweiligen Rotorblätter 200 verändert werden.

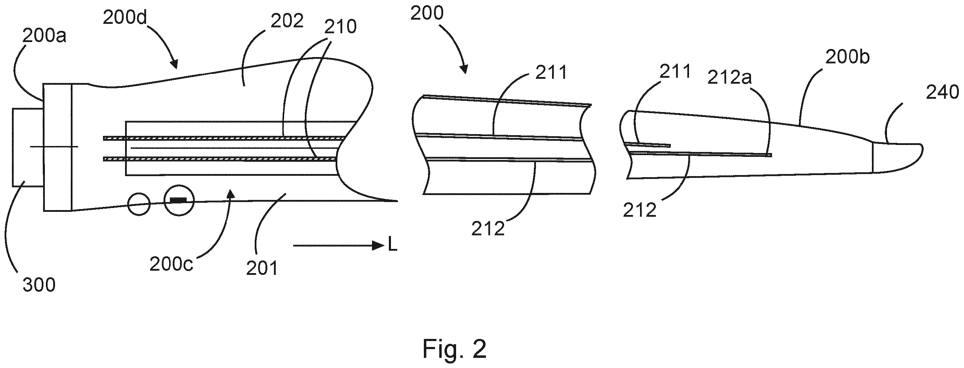

Fig. 2 zeigt eine schematische und abschnittsweise Darstellung eines Rotorblattes der Windenergieanlage von Fig. 1. Das Rotorblatt 200 weist einen Rotorblattwurzelbereich 200a, einen Rotorblattspitzenbereich 200b, eine Rotorblattspitze 240, eine Vorderkante 201, eine Hinterkante 202, eine Druckseite 200c und eine Saugseite 200d auf. Innerhalb des Rotorblattes 200 ist eine Luftführung vorgesehen, die mindestens ein Strömungshindernis aufweist. Eine Rotorblattheizung 300 kann im Bereich des Rotorblattwurzelbereichs 200 vorgesehen sein. Die Rotorblattheizung 300 weist mindestens einen Luftfilter auf und erzeugt warme Luft, die in das Innere des Rotorblattes geleitet wird.

Entlang einer Längsrichtung L des Rotorblattes 200 erstreckt sich innerhalb des Rotorblattes mindestens ein Steg 210, der Teil der Luftführung ist bzw. der aus anderen Gründen bereits vorhanden ist und die Luftführung lediglich eine sekundäre Funktion ist. Beispielsweise können zwei Stege 211, 212 vorgesehen sein, welche zunächst parallel und optional im Bereich der Rotorblattspitze 240 aufeinander zulaufend ausgestaltet sein können. Hierbei kann die Länge des ersten Steges 211 geringer sein als die Länge des zweiten Steges 212. Die Rotorblattspitze 240 kann optional als ein separates Teil ausgestaltet sein und an dem Rest des Rotorblattes 200 befestigt werden.

Durch die Rotorblattheizung erwärmte Luft kann entlang der Stege - als Teil der Luftführung - in Richtung der Rotorblattspitze 240 geführt und dann umgelenkt werden. Optional kann die Rotorblattspitze 240 zumindest teilweise hohl ausgestaltet sein, so dass ein Teil der erwärmten Luft durch die Rotorblattspitze 240 strömen kann, um die Rotorblattspitze 240 zu enteisen.

Gemäß einem Aspekt der vorliegenden Erfindung kann die erwärmte Luft mittels der Rotorblattheizung 300 entweder im Rotorblattwurzelbereich erzeugt werden, in dem Luft mittels einer Heizeinheit 300 erwärmt wird oder die erwärmte Luft wird dem Rotorblatt 200 in dem Rotorblattwurzelbereich 200a zugeführt.

Gemäß einem Aspekt der vorliegenden Erfindung kann die Luftführung eine Abzweigung aufweisen, um beispielsweise verschiedene Abschnitte innerhalb des Rotorblattes mit erwärmter Luft versorgen zu können. Im Bereich der Abzweigung ist eine erfindungsgemäße Umlenkeinheit 250 mit mindestens zwei Umlenkbögen vorgesehen, so dass erwärmte Luft, welche mittels der Abzweigung abgezweigt werden soll, auch durch die Umlenkeinheit strömt und damit umgelenkt wird.

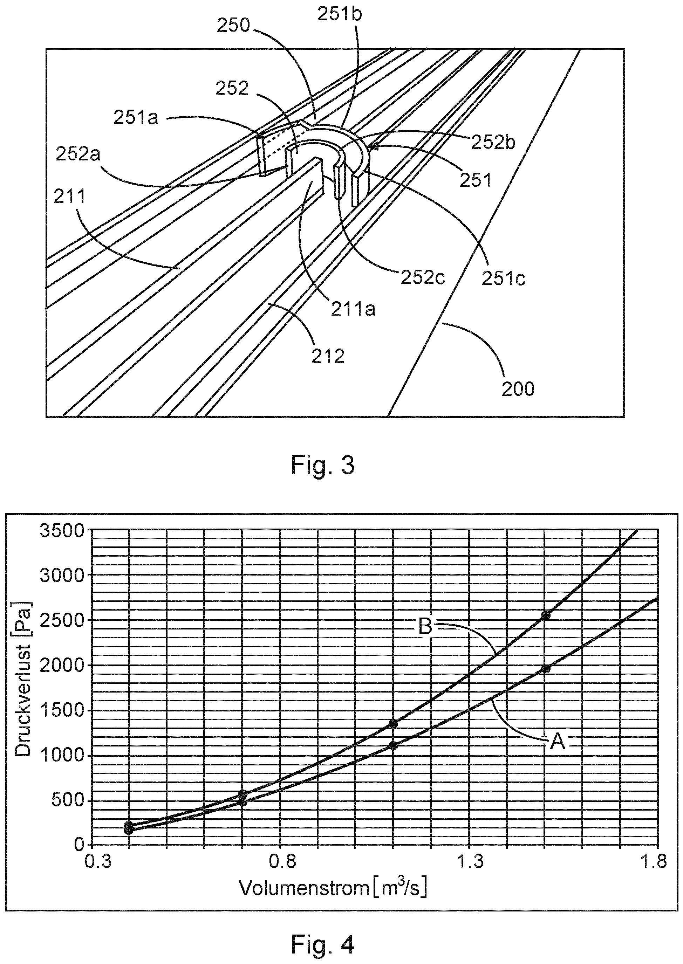

Fig. 3 zeigt eine schematische Darstellung eines Abschnitts eines Rotorblattes gemäß der Erfindung. Das Rotorblatt 200 weist zwei Stege 211, 212 auf, welche beispielsweise wie in Fig. 2 gezeigt verlaufen können. An dem ersten Steg 211 oder alternativ an dem zweiten Steg 212 ist eine Umlenkeinheit 250 vorgesehen. Die Umlenkeinheit 250 soll dazu dienen, erwärmte Luft, welche zwischen einer Vorderkante und dem ersten Steg 211, zwischen dem ersten und zweiten Steg 211, 212 oder zwischen dem zweiten Steg 212 und der Hinterkante von der Rotorblattwurzel Richtung Rotorblattspitze strömt, umzulenken. Die erwärmte Luft kann durch die Rotorblattheizung 300 im Bereich der Rotorblattwurzel erzeugt werden.

Während im Stand der Technik lediglich ein Umlenkbogen vorgesehen ist, weist die Umlenkeinheit 250 mindestens zwei Umlenkbögen 251, 252 auf. Hierbei kann der erste Umlenkbogen 251 einen größeren Radius aufweisen als der zweite Umlenkbogen 252. Zwischen einem Ende 211a des ersten Steges 211 und dem zweiten Umlenkbogen 252 ist ein Freiraum vorgesehen, so dass warme Luft durch den zweiten Umlenkbogen 252 umgelenkt werden kann. In einem Abstand zum zweiten Umlenkbogen 252 ist der erste Umlenkbogen 251 vorgesehen, der einen größeren Radius aufweist als der zweite Umlenkbogen 252. Wie in Fig. 3 zu sehen, weist der erste Umlenkbogen 251 ein erstes Ende 251a, einen Bogenabschnitt 251b und ein zweites Ende 251c auf. Das erste Ende 251a ragt in einen Bereich zwischen der Vorderkante 201 und dem ersten Steg 211. Das zweite Ende 251c ragt in den Bereich zwischen dem ersten und zweiten Steg 211, 212. Optional kann das erste Ende 251a des ersten Umlenkbogens 251 eine Verlängerung aufweisen, so dass das erste Ende 251a des ersten Umlenkbogens 251 an eine Wandung der Vorderkante 201 zumindest teilweise angrenzt. Der zweite Umlenkbogen 252 weist ein erstes und zweites Ende 252a, 252c und einen Bogenabschnitt 252b dazwischen auf.

Fig. 4 zeigt einen Graphen zur Veranschaulichung der Abhängigkeit des Druckverlustes der Umlenkeinheit von dem Volumenstrom. In Fig. 4 ist der Druckverlust A in Abhängigkeit des Volumenstroms für die Umlenkeinheit 250 mit dem ersten und zweiten Umlenkbogen dargestellt. Ferner ist der Druckverlust B für eine Umlenkeinheit mit lediglich einem Umlenkbogen dargestellt. Aus der Fig. 4 geht somit hervor, dass der durch die Umlenkeinheit hervorgerufene Druckverlust gemäß der Erfindung im Vergleich zum Stand der Technik erheblich reduziert werden kann.

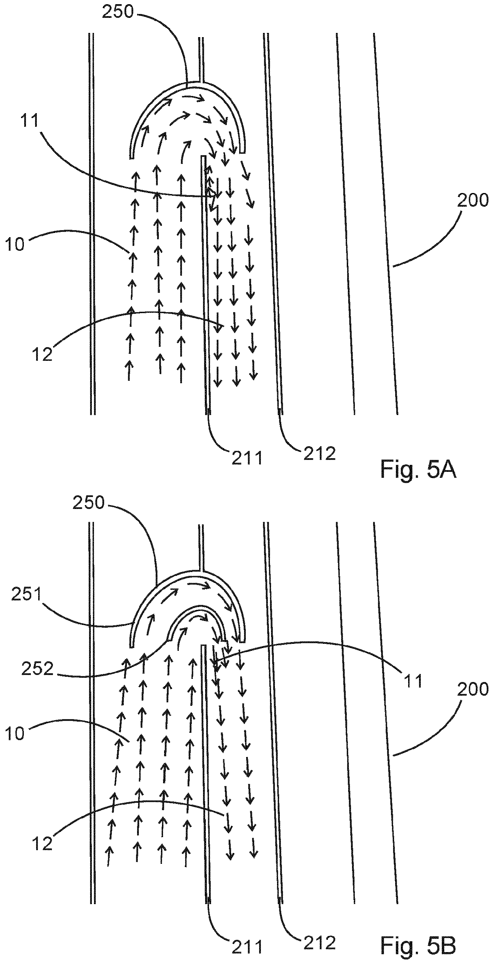

Fig. 5A und 5B zeigen eine schematische Veranschaulichung eines Druckverlustes bei einer Umlenkeinheit in einem Rotorblatt gemäß dem Stand der Technik und gemäß der Erfindung. In Fig. 5A ist ein Abschnitt eines Rotorblattes 200 mit einer Umlenkeinheit 250 mit einem einzigen Umlenkbogen dargestellt. In Fig. 5B ist ein Abschnitt des Rotorblattes 200 mit einer Umlenkeinheit 250 gemäß der Erfindung dargestellt, welche einen ersten und zweiten Umlenkbogen 251, 252 aufweist. Wie aus Fig. 5A hervorgeht, strömt erwärmte Luft 10 entlang des ersten Steges 211 und trifft auf die Umlenkeinheit 250, wo sie in einen Bereich zwischen dem ersten und zweiten Steg 211, 212 umgelenkt wird. Hierbei entsteht jedoch ein Totluftgebiet 11 am Ende des Steges 211.

Wie in Fig. 5B zu sehen, bewirkt die Umlenkeinheit gemäß der Erfindung mit den mindestens zwei Umlenkbögen 251, 252 eine erhebliche Reduzierung des Totluftgebietes 11. Dies führt zu der in Fig. 4 dargestellten Reduzierung des Druckverlustes durch die Umlenkeinheit. Damit kann die Beheizung des Rotorblattes gemäß der Erfindung erheblich verbessert werden.

## Patentansprüche

1. Windenergieanlagen-Rotorblatt (200), mit
einem Rotorblattwurzelbereich (200a),
einem Rotorblattspitzenbereich (200b),
einer Druckseite (200c),
einer Saugseite (200d),
einer Vorderkante (201),
einer Hinterkante (202),
einer Luftführung (210) für erwärmte Luft mit mindestens einem Strömungshindernis,
mindestens einer Umlenkeinheit (250) im Bereich des Strömungshindernisses,
wobei die Umlenkeinheit (250) mindestens zwei versetzt zueinander angeordnete Umlenkbögen (251, 252) aufweist.

2. Windenergieanlagen-Rotorblatt (200) nach Anspruch 1, wobei
die Luftführung (210) mindestens einen Steg (210, 211, 212) aufweist, welcher zwischen der Druckseite (200c) und der Saugseite (200d) angeordnet ist und sich entlang einer Längsrichtung (L) des Rotorblattes (200) erstreckt,
wobei die Umlenkeinheit (250) zwischen einem Ende des mindestens einen Stegs (210, 211, 212) und dem Rotorblattspitzenbereich (200b) vorgesehen ist und dazu ausgestaltet ist, Luft, welche von dem Rotorblattwurzelbereich (200a) entlang des mindestens einen Stegs (210-212) strömt, umzulenken.

3. Windenergieanlagen-Rotorblatt (200) nach Anspruch 1 oder 2, wobei
die Luftführung (210) eine Abzweigung und eine Umlenkeinheit (250) an der Abzweigung aufweist.

4. Windenergieanlage (100), mit
mindestens einem Windenergieanlagen-Rotorblatt (200) nach einem der Ansprüche 1 bis 3, und
mindestens einer Rotorblattheizung (300) zum Bereitstellen von erwärmter Luft für das Windenergieanlagen-Rotorblatt (200).
